# EUROPEAN PATENT APPLICATION

(11) **EP 4 109 297 A2**
(43) Date of publication of application: **28.12.2022**
(21) Application number: 22176682.7
(22) Date of filing: 01.06.2022
(51) Int. Cl.: G06F 16/35, G06F 16/906, G06V 30/41, G06V 30/196, G06V 30/412

(54) **AUTOMATED CLASSIFICATON AND INTERPRETATION OF LIFE SCIENCE DOCUMENTS**

(30) Priority: 04.06.2021 US 202117339334
(71) Applicant: IQVIA Inc., Danbury, CT 06810 (US)
(72) Inventor: Shorter, Gary Douglas, Danbury, 06810 (US); Ahrens, Barry Matthew, Danbury, 06810 (US); Baili Ben Abdallah, Naouel, Danbury, 06810 (US)
(74) Representative: Blumbach · Zinngrebe Patentanwälte PartG mbB

(57) **Abstract**

A computer-implemented method for performing quality review of life science documents is described. One or more of the life science documents are scanned by a mobile device, wherein the one or more life science documents are sent to a database. Language, image, rotation, and noise are among the content that is checked among the life science documents, and wherein similarities, suspicious changes, document layouts, and missing sections are checked among the one or more life science documents. In addition, feedback is sent by a system to an originator of the life science documents based on the content regarding imaging, rotation, and noise and the similarities, suspicious changes, document layouts and missing sections.

## Description

### CROSS REFERENCE TO RELATED APPLICATIONS

This application is a continuation-in-part of 17/112,322, filed December 4, 2020, entitled, "AUTOMATED CLASSIFICATION AND INTERPRETATION OF LIFE SCIENCE DOCUMENTS", which is a continuation-in-part of US Serial No. 17/070,533 filed October 14, 2020, entitled, "AUTOMATED CLASSIFICATION AND INTERPRETATION OF LIFE SCIENCE DOCUMENTS", which is a continuation of US Serial No. 16/289,729 filed March 1, 2019, entitled, "AUTOMATED CLASSIFICATI ON AND INTERPRETATION OF LIFE SCIENCE DOCUMENTS", now, US Patent No. 10,839,205, which are incorporated herein by reference in their entirety.

### BACKGROUND

Automated classification is typically utilized to effectively manage text, images, and unstructured information in documents. Also referred to as categorization, clustering, or text classification, automated classification generally enables documents to be divided and organized based on a set of predefined categories or classes for rapid and easy retrieval of information.

### SUMMARY

A computer-implemented tool for automated classification and interpretation of documents, such as life science documents supporting clinical trials, is configured to perform a combination of text, document construct, and image analyses to enhance classification accuracy by enabling a more comprehensive machine-based understanding of document content. The combination of analyses provides context for classification by leveraging spatial relationships among text and image elements, identifying characteristics and formatting of elements, and extracting additional metadata from the documents as compared to conventional automated classification tools.

The text analysis identifies raw text and its general location in a document. Text sequence can be optionally tracked in some implementations. The document construct analysis provides the automated classification and interpretation tool with additional understanding of the document by identifying relevant context such as spatial construct information (e.g., position of images on a page, location of text in headers, footers, titles, use of rows and columns in tables, etc.) and formatting (e.g., bold, italics, font, text size, etc.). The document construct analysis may also maintain connections among document elements by tracking text that neighbors document elements on either side. The image analysis is directed to graphical content such as logos, diagrams, charts and tables, captions, and the like to extract additional context to further deepen the machine-based understanding of the document.

Although text analysis may be utilized alone with satisfactory results in some limited classification implementations, the construct and image analyses are ordinarily not configured to operate individually for document classification. However, the combination of the three analyses provides an improvement in classification accuracy by operating synergistically to assist in disambiguation between document classes which can be numerous and subtly distinct in some cases. The combination of analyses enables document classes to be differentiated by providing additional meaning using the identified relevant context. This enables document text that would otherwise be ambiguous to be effectively utilized for classification purposes.

In various illustrative examples, the automated classification and interpretation tool is configured to apply machine learning to an artificial intelligence (AI) engine that is trained with historical classified documents. The AI engine may be accessed by the tool or be incorporated in whole or part into the tool, and utilized to implement the combined text, document construct, and image analyses in whole or part. The analysis algorithms are subject to adjustments from a human operator through a user interface (UI) that is exposed on the automated classification and interpretation tool. The adjustments can be used to improve the automated document classification and interpretation and may be used as a machine learning input to improve performance of the classification and interpretation tool in general.

The computing device supporting the automated classification and interpretation tool can incorporate an image capture device such as a camera or scanner or be configured to interoperate with a discrete image capture device that is used to digitize life science documents. The tool can be operated in the field to apply the text, document construct, and image analyses to provide real-time classification feedback for the captured documents to the human operator. The real-time classification feedback may include suggested classification for the captured documents as well as associated metadata in some implementations. The operator can review the suggested document classification and metadata and provide approval or corrections through the UI. Corrections can be used as machine learning inputs to enhance the accuracy of the automated classification and interpretation tool.

The present computer-implemented automated classification and interpretation tool provides improvements in the underlying operation of the computing device on which it executes by providing for increased classification accuracy. More specifically, the utilization of a combination of raw text, document construct, and image analyses enables efficient utilization of processing cycles, memory requirements, and network bandwidth by improving the machine's knowledge depth to produce more accurate classification to thereby reduce a need to perform manual reclassification or discard inaccurate classification results. The automated classification and interpretation tool may further enhance the efficiency of the human-machine interface on the computing device because the tool more accurately classifies life science documents which improves the effectiveness of subsequent computer-assisted document searches and retrievals.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. Furthermore, the claimed subject matter is not limited to implementations that solve any or all disadvantages noted in any part of this disclosure. It will be appreciated that the above-described subject matter may be implemented as a computer-controlled apparatus, a computer process, a computing system, or as an article of manufacture such as one or more computer-readable storage media. These and various other features will be apparent from a reading of the following Detailed Description and a review of the associated drawings.

### DESCRIPTION OF THE DRAWINGS

FIG 1 shows an illustrative computing environment in which a computer-implemented automated classification and interpretation tool executes on a computing device;
FIG 2 shows an illustrative classification model under which life science documents are classified as part of a trial master file (TMF);
FIG 3 shows illustrative details of the computer-implemented automated classification and interpretation tool that executes on a computing device;
FIG 4 shows illustrative data structures associated with analyses that are applied in combination during operation of the computer-implemented automated classification and interpretation tool;
FIGs 5 and 6 show illustrative life science documents that may be classified in a TMF;
FIG 7 shows illustrative operational details of a text analysis process;
FIG 8 shows illustrative operational details of a construct analysis process;
FIG 9 shows illustrative operational details of an image analysis process;
FIGS. 10(A)-(C) illustrate a quality review of life science documents;
FIGS. 11(A)-(D) illustrate an automated feedback of life science documents;
FIGS. 12(A)-(B) illustrates a multi-language NLG document creator for life science documents;
FIG 13 is a flowchart showing an illustrative classification process;
FIG 14 shows illustrative manual adjustments to processes operating on the computer-implemented automated classification and interpretation tool that may be utilized as machine learning input;
FIG 15 shows illustrative real-time classification feedback provided by the automated classification and interpretation tool to a human operator;
FIGs 16, 17, and 18 show illustrative methods; and
FIG 19 is a block diagram of an illustrative computing device that may be used at least in part to implement the present automated classification and interpretation of life science documents.

Like reference numerals indicate like elements in the drawings. Elements are not drawn to scale unless otherwise indicated.

### DETAILED DESCRIPTION

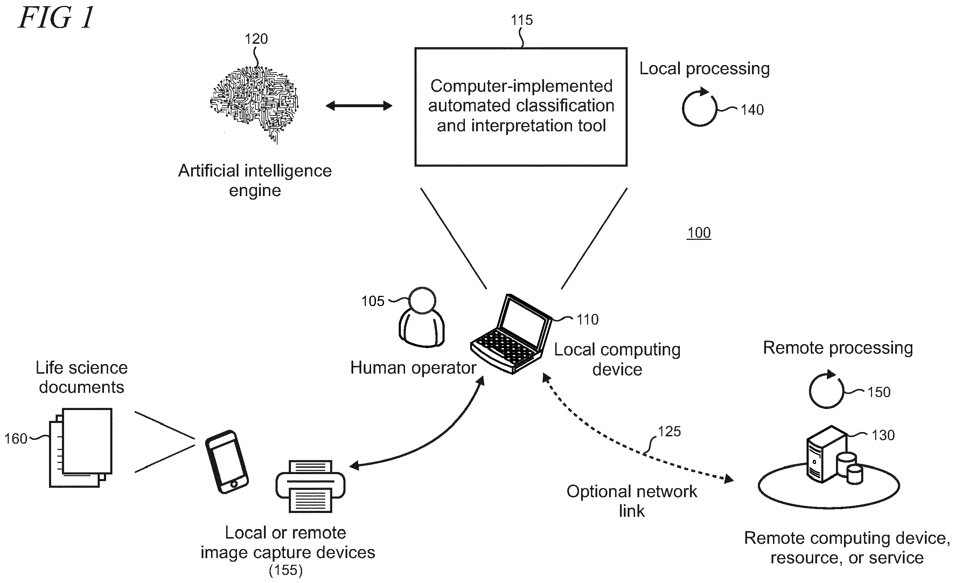

FIG 1 shows an illustrative computing environment 100 in which a human operator 105 employs a computing device 110 that is configured to support a computer-implemented automated classification and interpretation tool 115. The tool may be implemented, for example, as a software application that executes on the computing device. In alternative implementations, the automated classification and interpretation tool may be implemented using hardware, firmware, or a combination thereof depending on the needs of a particular implementation of the present automated classification and interpretation of life science documents. The automated classification and interpretation tool can interface with, or incorporate directly, an artificial intelligence (AI) engine 120 that may be implemented, for example, using a neural or deep-learning network, expert system, or other suitable system that is configured for machine learning.

The computing device 110 comprises an electronic device such as a personal computer, server, handheld device, workstation, multimedia console, smartphone, tablet computer, laptop computer, or the like. In the discussion that follows, the use of the term "computing device" is intended to cover all electronic devices that perform some computing operations, whether they be implemented locally, remotely, or by a combination of local and remote operation.

The automated classification and interpretation tool 115 may be configured to optionally communicate over a network link 125 with a remote computing device, resource, or service 130. While this illustrative example employs processing at the local computing device 110 (as indicated by reference numeral 140), it is noted that other processing allocations and arrangements may also be utilized. For example, the automated classification and interpretation tool may be instantiated as a remote or cloud-based application. Various combinations of local processing 140 and remote processing (as indicated by reference numeral 150) can be implemented as appropriate for a given automated classification and interpretation tool implementation.

The communications network link 125 can be implemented using any of a variety of network types and network infrastructure in various combinations or sub-combinations including local-area networks (LANs), wide-area networks (WANs), cellular networks, satellite networks, IP (Internet-Protocol) networks such as Wi-Fi under IEEE 802.11 and Ethernet networks under IEEE 802.3, a public switched telephone network (PSTN), and/or short range networks such as Bluetooth^{®} networks. Network infrastructure can be supported, for example, by mobile operators, enterprises, Internet service providers (ISPs), telephone service providers, data service providers, and the like. The communications network link 125 may utilize portions of the Internet (not shown) or include interfaces that support a connection to the Internet so that the computing device 110 can access data or content and/or render user experiences supported by the remote service provider and/or other service providers (not shown).

Various image capture devices 155 can be utilized in the computing environment to capture images of life science documents that are deconstructed as described below. The image capture devices can be standalone devices such as cameras or scanners or be incorporated into other computing devices 110. The image capture devices can be deployed locally or remotely. For example, images can be captured at a remote worksite and transmitted to the local computing device 110 or be transmitted to a cloud-based storage service and then accessed by the computing device over a network link. Alternatively, the computing device and image capture device may be co-located.

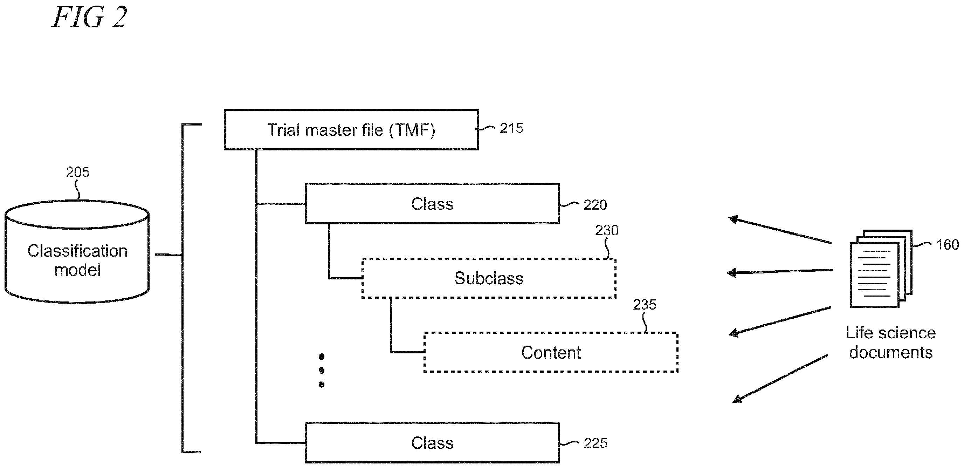

FIG 2 shows an illustrative classification model 205 under which life science documents 160 may be classified as part of a trial master file (TMF) 215. The life science industry typically needs to comply with requirements of regulatory agencies in their oversight of the design, conduct, recording, and reporting of clinical trials. The TMF is examined by inspectors to demonstrate the compliance of the sponsor, trial monitor, and the investigators with applicable standards and regulatory requirements. The TMF is the collection of life science documents that typically permits evaluation of the compliance of the clinical trial and the quality produced. It is noted that the term "life science document" has general applicability to the documents that are typically collected in the TMF.

The TMF 215 is organized with different categories or classes of life science documents 220 ... 225. In some implementations, various subclasses 230 and content 235 may also be included in the TMF or utilized in classification systems other than those which use a TMF. The TMF may be organized to include categories or classes as defined by the Drug Information Association (DIA) in some cases.

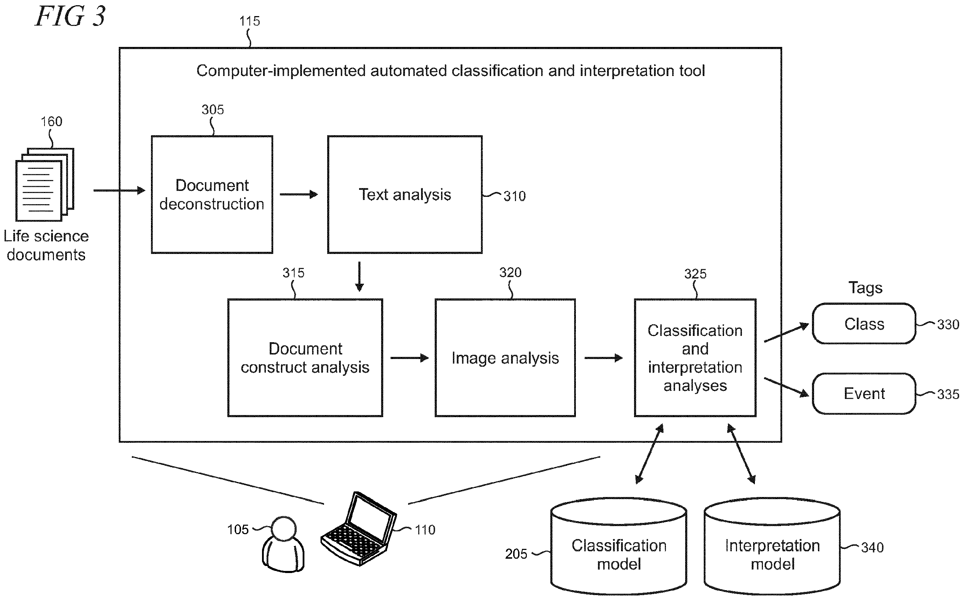

FIG 3 shows illustrative details of the computer-implemented automated classification and interpretation tool 115 that executes on the computing device 110. The inputs to the tool include the life science documents 160 and the outputs from the tool include a class tag 330 and event tag 335 that are respectively applicable to each of the documents 160. The class tag identifies the class 220 ... 225 (or subclass or content as appropriate) into which the life science is classified by operation of the tool. The event tag identifies objects in the documents that the tool interprets as having significance for events, actions, and/or triggers. For example, the event tag may identify document content that pertains to issues of safety, regulatory factors, data management, and other information that is associated with the content of the document.

The computer-implemented automated classification and interpretation tool 115 includes functionalities configured for document deconstruction 305, text analysis 310, document construct analysis 315, image analysis 320, and classification and interpretation analyses 325. The classification and interpretation analyses are supported by the classification model 205 and an interpretation model 340 which may be implemented as part of the tool 115 or be externally implemented as databases or resources on other computing devices.

Document deconstruction 305 includes converting the captured life science documents 160 to a digitized form that uses a standardized data structure across all documents that is expressed for example using XML (eXtensible Markup Language) or other suitable representation. The quality of the source materials may be expected to vary widely in typical implementations. Thus, the document deconstruction can apply various techniques to accommodate noise and unwanted artifacts during digitization to improve quality of the input to the automated classification and interpretation tool 115. In some cases, relevant descriptive information such as metadata can be collected for the input life science documents and stored. Such information may be used, for example, for TMF management and other purposes.

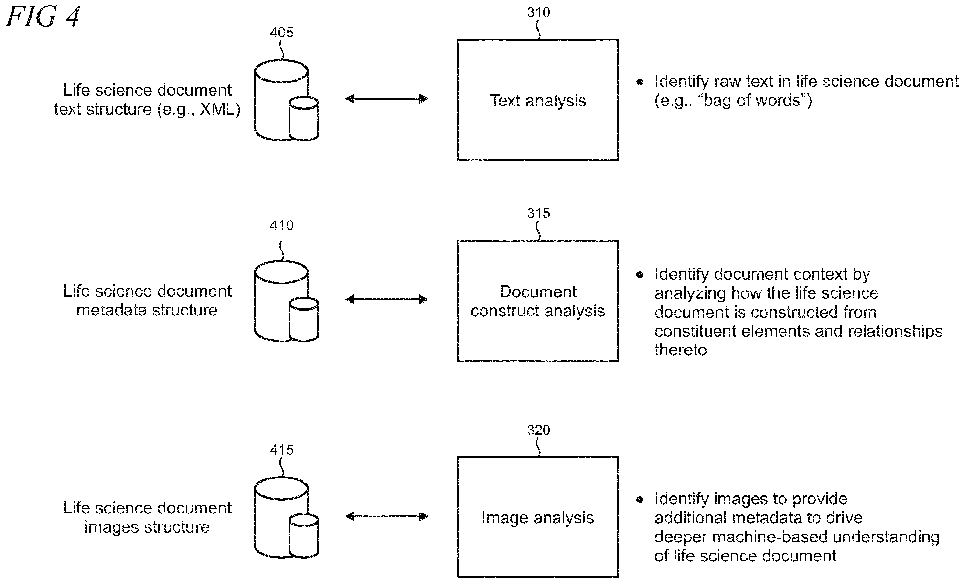

FIG 4 shows illustrative data structures that are respectively associated with the text, document construct, and image analyses that are applied in combination during operation of the computer-implemented automated classification and interpretation tool 115. A life science document text structure 405 supports the text analysis 310 to enable raw text to be identified from the life science documents 160 (FIG 1), typically without regard to sequence context (i.e., using a "bag of words" approach). However, text sequence can be tracked and utilized in some implementations of the tool.

A life science document base metadata structure 410 supports the document construct analysis 315 to enable utilization of document context such as spatial construct information for document elements (e.g., position of images on a page, location of text in headers, footers, titles, use of rows and columns in tables, etc.) and formatting (e.g., bold, italics, font, text size, etc.). The document construct analysis may also maintain connections among document elements by tracking text that neighbors document elements on either side. A document images structure 415 supports the image analysis 320 to enable graphical content such as logos, diagrams, charts and tables, captions, and the like to extract additional context to further deepen the machine-based understanding of the life science documents.

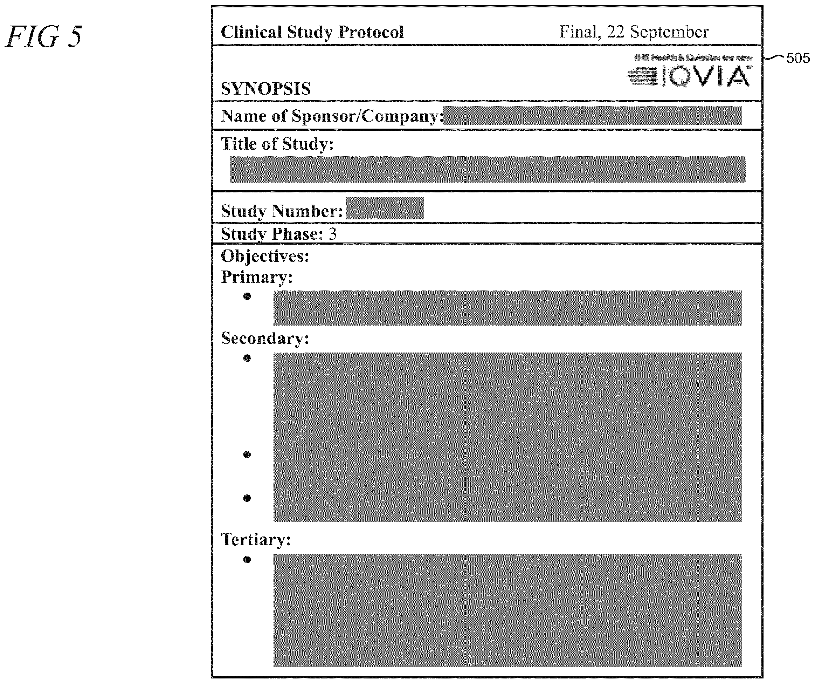

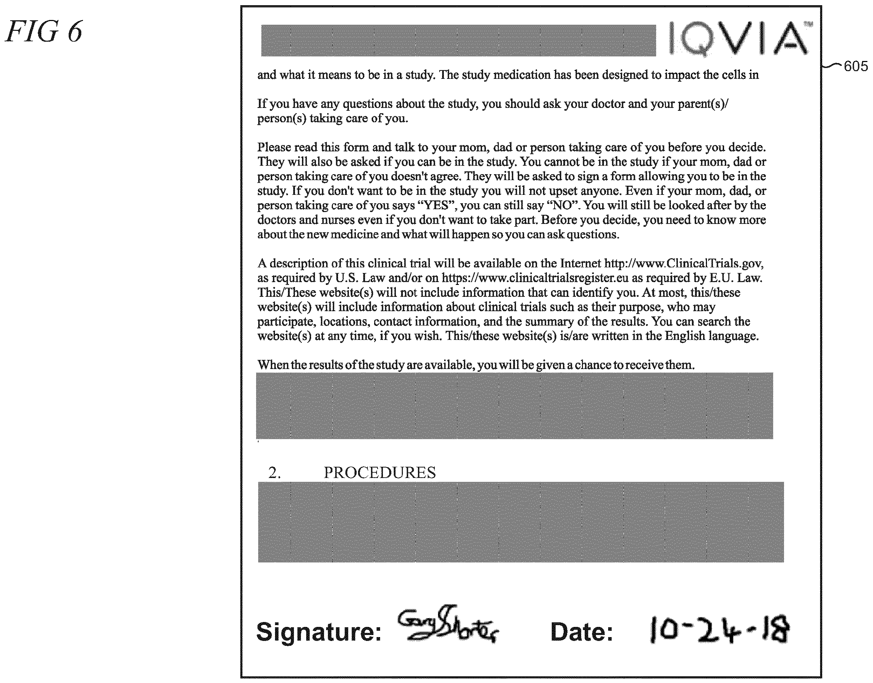

An illustrative example of an application of the text, document construct, and image analyses to life science documents is now presented. FIGs 5 and 6 show illustrative life science documents that may be classified in a TMF. FIG 5 shows an illustrative protocol synopsis 505 and FIG 6 shows an illustrative informed assent form 605. Details that are not pertinent to the presentation of the example have been redacted from the life science documents 505 and 605. The documents in this example are classified differently under DIA guidance, however each document has similar text content including the word "study." The discussion that follows illustrates how the present computer-implemented automated classification and interpretation tool and application of the combination of text, document construct, and image analyses enables the disambiguation and accurate classification of the documents.

With respect to clinical trial protocols that are digitized, sections can be extracted. Accordingly, automated protocol digitization, modularization and monitoring risk can be applied using structured library, structured modules, and risk assessment approaches with the text analysis, document construct analysis, and image analysis. Natural Language Processing (NLP) and Machine Learning (ML) can be applied to create specific modules.

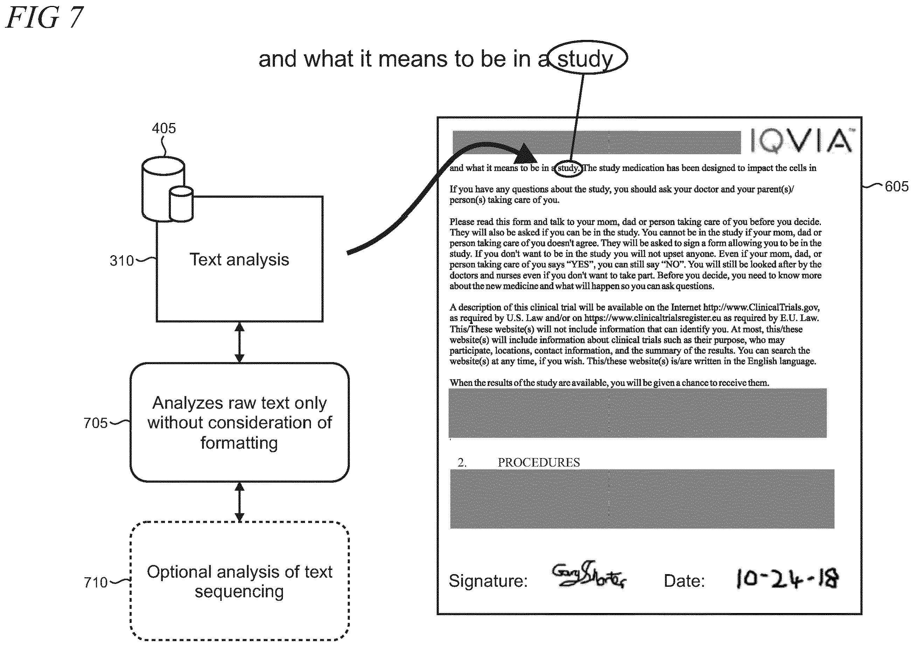

As shown in FIG 7, the text analysis 310 includes an analysis of the raw text without consideration of formatting (as indicated by reference numeral 705). As noted above, text sequence may be optionally utilized (710) to provide additional context in some implementations. Here, for example, the text analysis identifies the word "study" is included in the informed assent document 605.

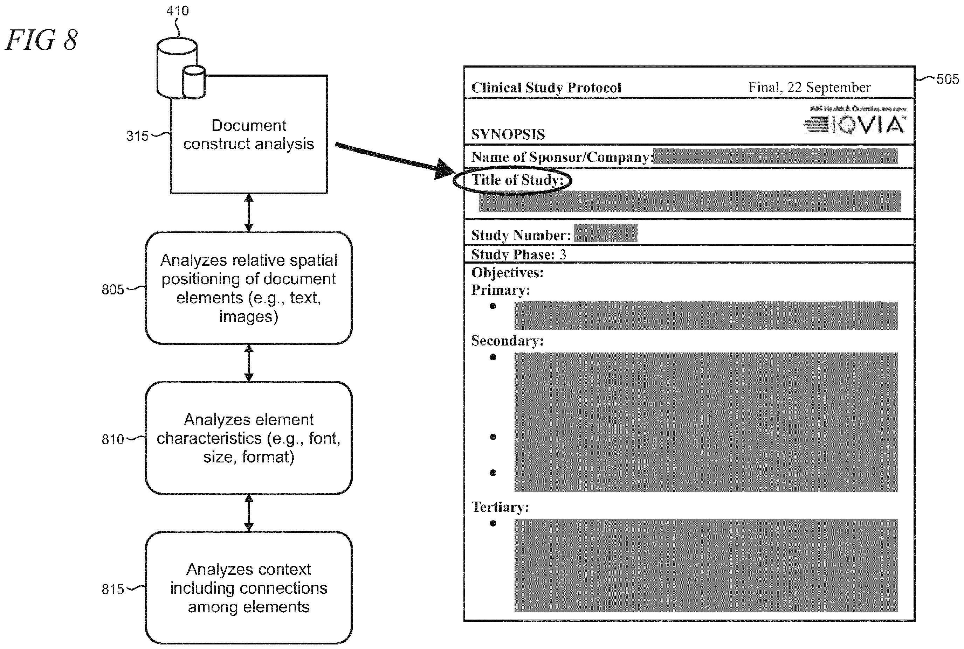

As shown in FIG 8, the document construct analysis 315 includes analyzing the relative spatial position of document elements (805) such as text and images. Element characteristics are also analyzed (810) including text font, size, and format (e.g., bold, italics, underline, subscript, superscript, etc.). Context connections may also be analyzed (815) using, for example, the "nearest neighbor" concept, by keeping the connected location of the element in relation to the text information occurring just before and just after. Such content connection allows for an understanding of the relevance of a document element (e.g. image) in relation to its position within the document.

In this example, the document construct analysis 315 identifies the word "study" in the protocol synopsis document 505 as being at the top of the first page of the document with a bold font. The document construct analysis 315 further identifies that the document construction includes the word being in a cell of a table with neighboring text of "Title of Study." Such characteristics constitute metadata that provides additional context that enables the computer-implemented automated classification and interpretation tool to gain deeper understanding of the protocol synopsis document 505 to thereby disambiguate it from the informed assent document 605 (FIG 6).

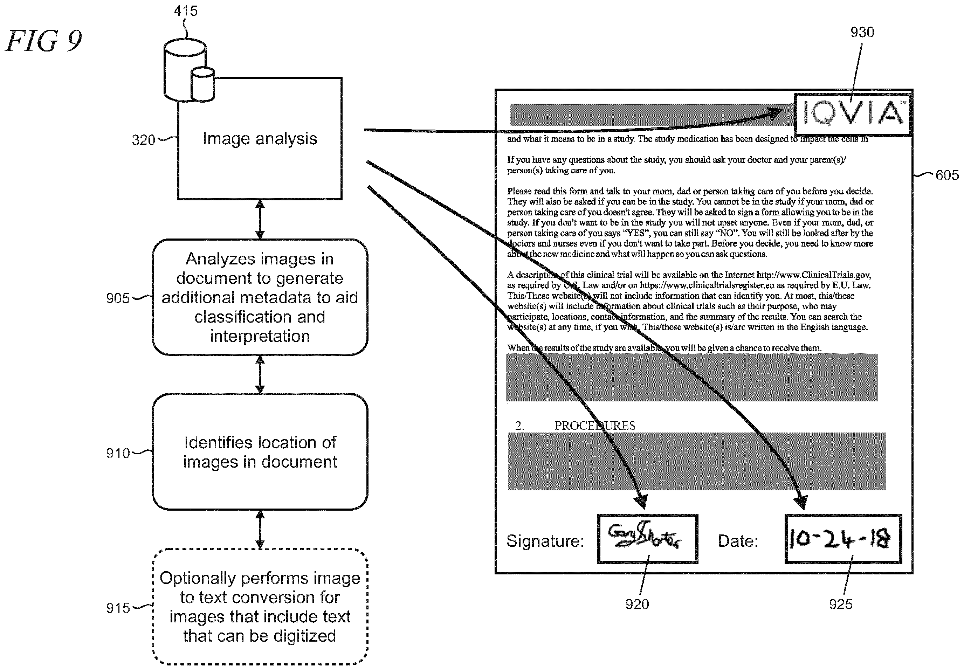

As shown in FIG 9, the image analysis 320 includes analyzing images in the document to generate additional metadata to aid document classification and interpretation (905). Location of the images in the document may also be identified (910). In some implementations, image to text conversions may be applied (915) to create digitization of text elements that may be included in the images. In this example, the image analysis identifies a hand written "wet ink" signature 920 and date 925 to verify that the informed assent document is signed. In some cases, the signature and date can be converted to digital representations. The image analysis may also facilitate understanding of the graphical company logo 930 to enable further understanding of an entity that owns the document.

In an example, the structured library approach can be applied to the text analysis 310, document construct analysis 315, and the image analysis 320. Key metadata can be collected. Key fields that clearly can identify the protocol, such as the text, image and construct, and areas such as the date, the author, and the pharma company, for example, can be collected. An ML model can be applied to categorize the protocol content into clusters of similarity. The ML model can identify whether the new protocol with life science documents is actually a new protocol, a repeat of a prior protocol, or an amendment of the previous protocol. As new protocols come through into their digital structure, the ML model can provide a TOC alignment for the new protocols. A need can also exist to build out algorithms in which specific algorithms are located within the protocol. In other examples, comparisons can be made with other life science documents as well.

With the structured modules approach, natural language processing (NLP) capabilities can be used to find relevant text and associate the text to tokens. Sections of text that are necessary for specific modules are identified by a module algorithm. NLP can also be used in relation to study information extraction, start-up information extraction, and operational information extraction. Further, NLP can be used in relation to statistical operation information and medical information. In addition, sub-module content can be created that can include patient burden, risk factors, safety factors, and regulatory factors.

In reference to the risk assessment approach, a connect analysis can be performed in which cases are identified where similarities exist outside of a normal expected structure. A de-identification of text elements such as names, addresses, drug, and any specific company can also occur. Further, there can also be a de-identification of images, and logos. A tagging of differences between protocols can occur. Modular similarities between protocols can be identified as well. Clinical trial data and operational risk can be reviewed. Moreover, using the modules, areas of risk can thereby be highlighted and identified, wherein biomarkers can be associated with a higher degree of risk. In addition, given the structure library and structure modules mentioned above, changes in the protocol amendment can be identified. As such, changes to risk can be identified with new amendments. Further, highlighting these risks can help focus on immediate action. Once human review has occurred and resulted in edits, the system can feed the information back to an NLP database for further updates and other edits.

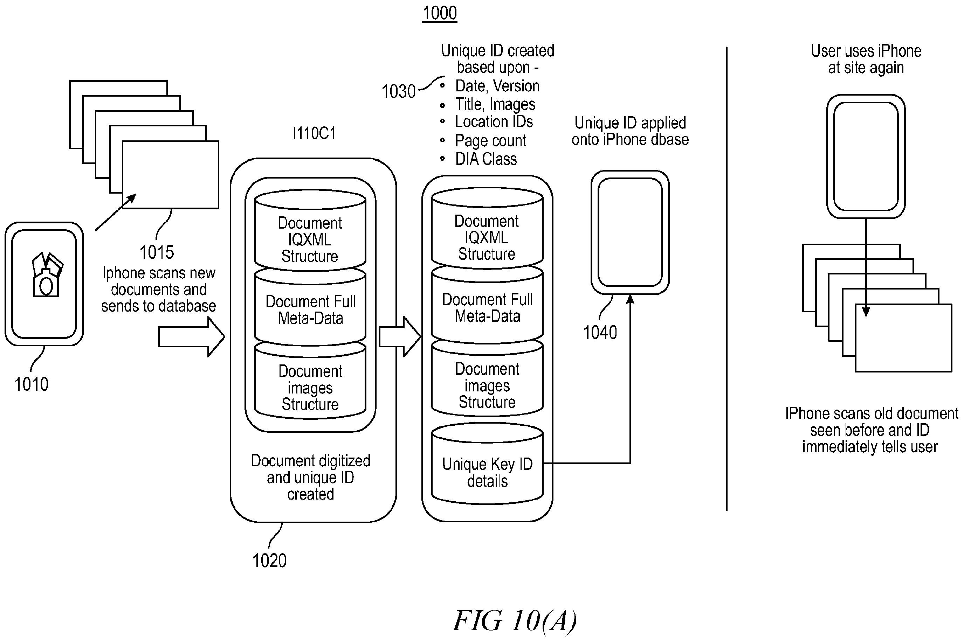

FIG. 10(A) illustrates a quality review 1000 of life science documents. An iphone 1010 scans new life science documents 1015 that are received, and send the life science documents to the database. Each of the life science documents are digitized 1020, with unique ID created. The document IQXML structure, full meta-data, and the images of the life science documents are digitationed. As Such, a unique key ID 1030 for the life science documents is thereby created from the digitization 1020 of the life science documents. The unique ID 1030 is applied to the iphone database 1040. The user can use the iphone 1010 at the site again. As such, when the iphone 1010 scans old documents that the user has seen before, the unique ID 1030 immediately alerts the user that the document of the unique key ID 1030.

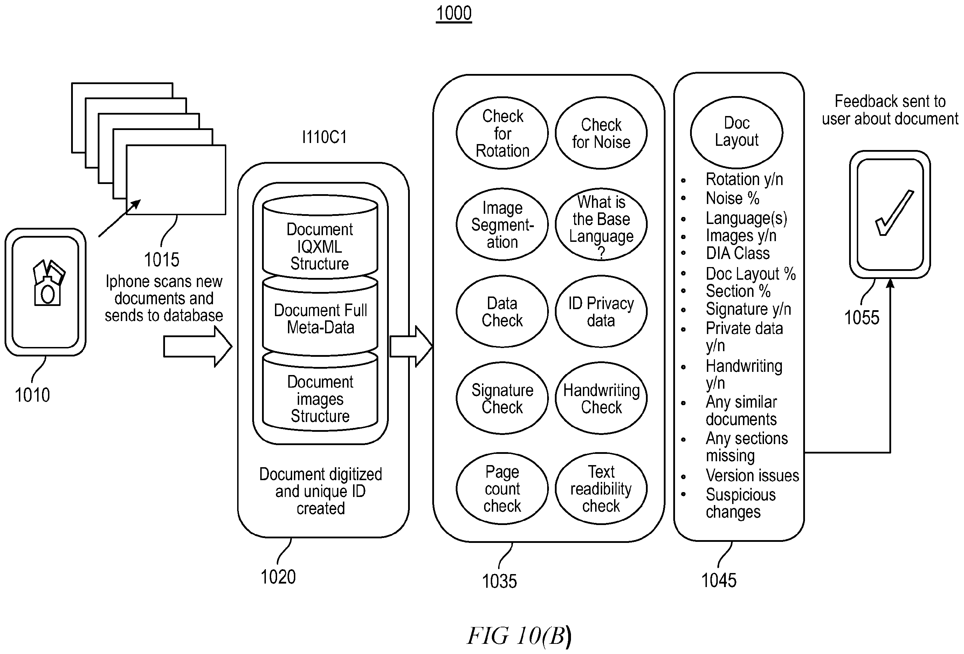

FIG. 10(B) illustrates how the quality review 1000 involves checking the content of the life science documents. The iphone 1010 can involve scanning the life science documents 1015. The documents are digitized 1020. The content 1035 for the documents is checked. The content 1035 can include rotation, image segmentation, date check, signature check, and page count check. The content 1035 can also include a noise check, the base language within each document, private data, a handwriting check, and a text readability check. The document layout 1045 can also include the rotation, noise, language, and signature of the documents. The document layout 1045 can additionally include handing, any similar documents, missing sections of the documents, suspicious changes within the documents, and version issues (such as the correct versions.

In FIG. 10(B), feedback 1055 is sent to the user based on the content 1035 and the document layout 1045 of the documents. The system can send to the originator of the life-science documents feedback. The feedback can be based on based on the content regarding, but not limited to, imaging, rotation, noise, the similarities, suspicious changes, document layouts, and missing sections. The feedback also includes whether the life-science documents are free of any issues or whether the life-science documents include one or more issues. In addition, the system provides an identification (ID) for the content-checked life science documents.

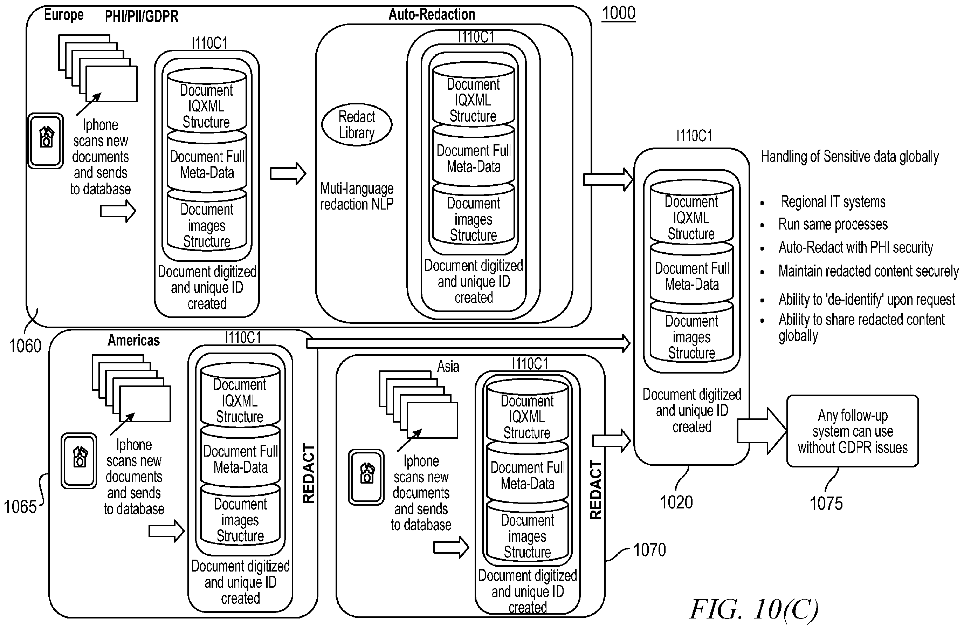

FIG. 10(C) illustrates the quality review 1000 in which the redacted data can be shared globally. The redacted data can be in Europe 1060, the Americas 1065, and also in Asia 1070. The life science documents can be scanned from Europe, the Americas, and Asia. In addition, the content of the life science documents that will require potential redaction is identified. Such content can include, but is not limited to, private data and information. Any follow-up system 1075 can also use the science documents without any GDPR issues.

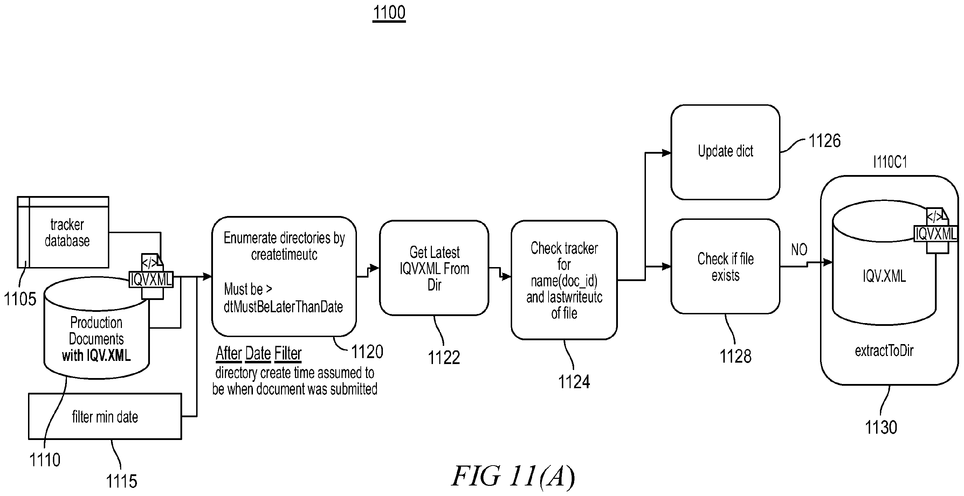

FIGS. 11A)-(D) describes an automated constant download 1100. In FIG. 11(A), a IQVXML Worker agent is configured to continuously download and update a master data set of clinical documents. The clinical documents are used in supervised learning of multiple classifiers. A Tracker database 1105 is illustrated along with production documents 1110. A filter 1115 is also illustrated. The tracker database 1105, production documents 1110, and filter 1115 feed into an after date filter 1120. The after date filter 1120 is where the directory creates time assumed to be when the document was submitted. At step 1122, the latest IQVXML information from the directory is obtained. At step 1124, the tracker database 1105 is checked for the name of the document and last bits of information on the file. At step 1126, the document is updated. However, at step 1128, a check is made as to whether the file exits. If the file does not exist, then the worker agent extracts a file at the directory or IQV. XML data structure 1130.

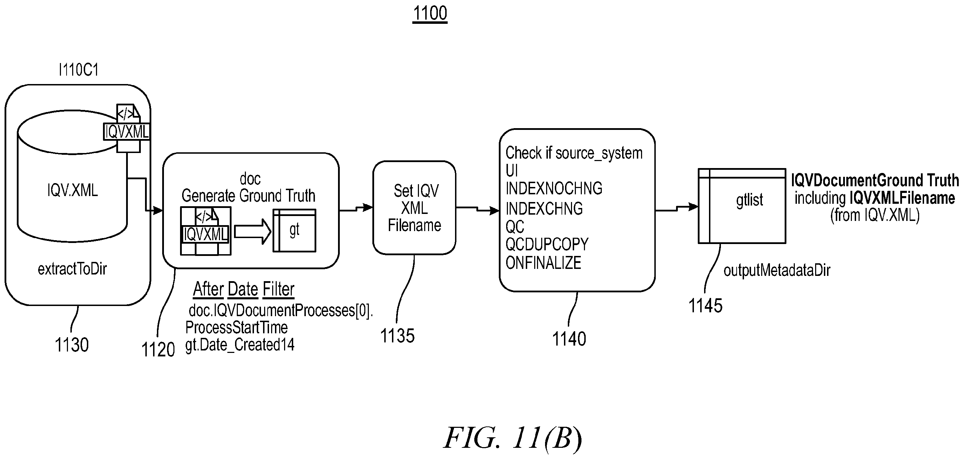

Referring to FIG. 11(B), the master set of clinical documents are updated. As such, the ground truth labels for each of the clinical documets are also updated. A process 1100 is illustrated that capitalizes on the IQV. XML data structure, or proprietary standard that serves as the digital twin of the document.

In FIG. 11(B), the IQV.XML data structure 1130 is illustrated. At the after date filter 1120, a ground truth label is generated. At step 1135, a file name is set. The filename will be in accordance with the IQV.XML data structure 1130. At step 1140, the source system can be checked. The indexing and occupancy can be checked. A ground truth (gt) list 1145 is illustrated. The file name can be for example IQVDocumentGroundTruth.

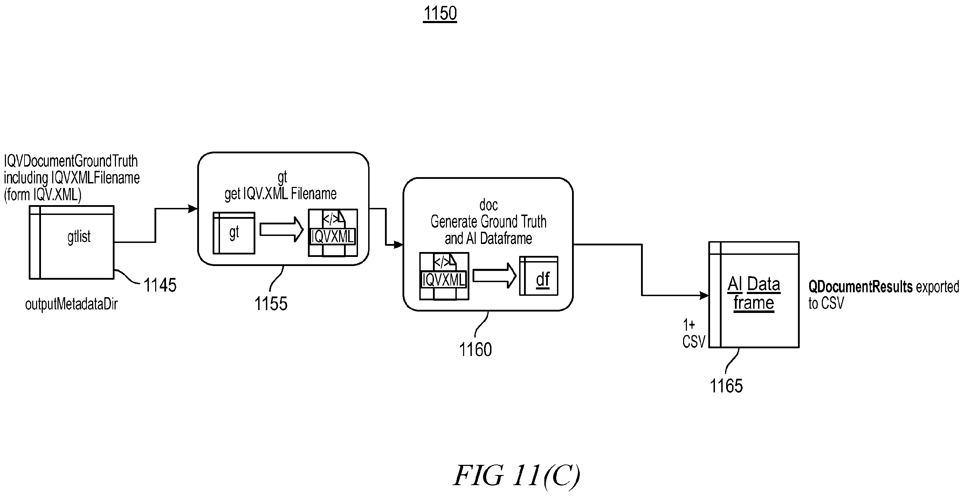

Referring to FIG. 11(C), an automated generation of an artificial intelligence (AI) analysis data frame is illustrated. An automated process 1150 is shown that generates the AI analysis data frame that serves multiple purposes. The gt list 1145 is illustrated. At step 1155, the filename is obtained. The filename will be in accordance with the IQV.XML data structure 1130. At step 1160, the ground truth and AI dataframe is generated. The ground truth and AI dataframe is generated to ultimately produce the AI analysis data frame. Accordingly, the AI analysis data frame1165 is ultimately produced.

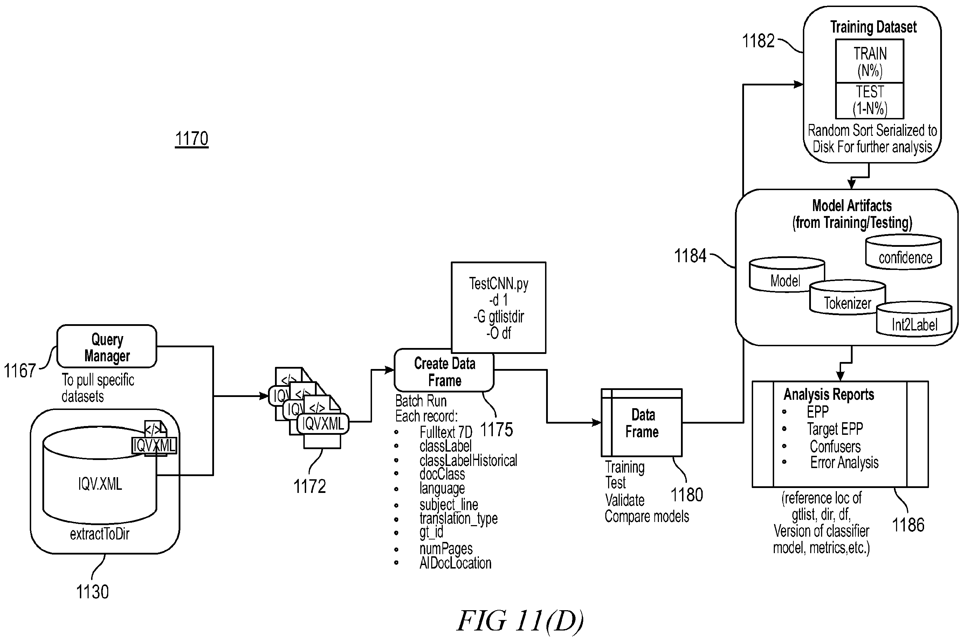

In FIG. 11(D), continuous automated training occurs at 1170. Moreover, continuous automated training with automated feature search and automated new class detection occurs. Clinical Document specific features are collected and re-weighted using latest inputs to allow for continuous learning. Further, manual effort is greatly reduced as new document types are automatically detected, gathered, and trained in the system. In addition, modified and deleted document types are automatically phased out of the training.

Referring to FIG. 11(D), the IQV.XML data structure 1130 is shown in a process 1170. Further, a query manager 1167 is also illustrated. The query manager 1167 pulls specific datasets 1172. The datasets 1172 are used to create a data frame. At step 1175, the data frame 1180 is created. The data frame 1180 can be used for a training dataset 1182. The training dataset 1182 can be used for further analysis. The training dataset 1182 can be used upon Model Artifacts 1184. The model artifacts can include one or more artifacts due to the analysis from the training dataset 1182. Further, analysis reports 1186 can occur from the model artifacts 1184. The analysis reports 1186 can include error analysis of the datasets 1170. As such, datasets 1170 are extracted from the data structure 1130 to create a data frame 1180, which can ultimately produce training datasets 1182, model artifacts 1184, and analysis reports 1186.

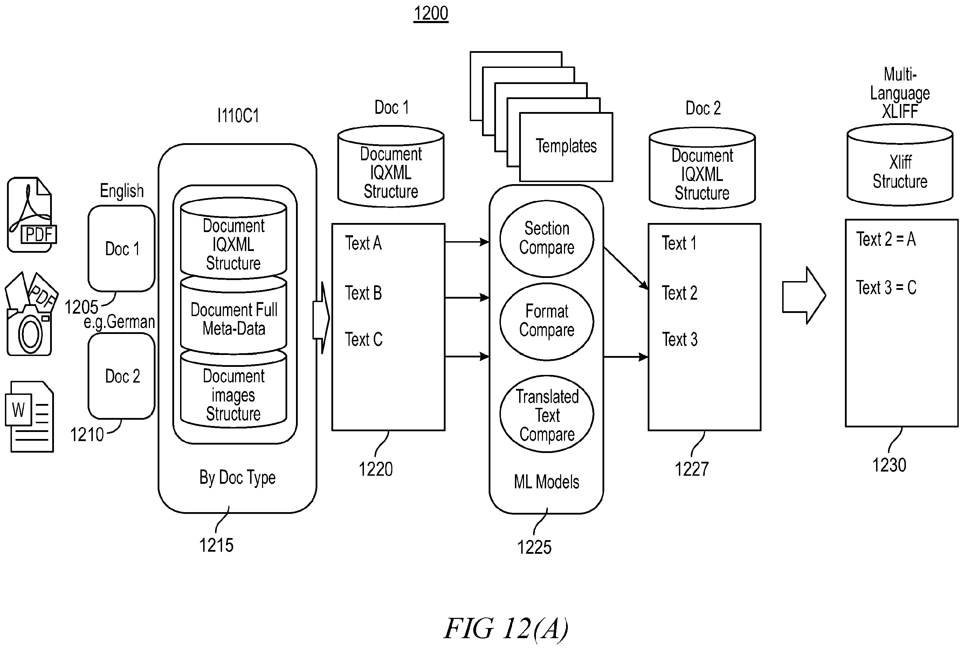

In FIG. 12(A), a natural language processor (NLP) Auto-creator for multi-language text from documents is illustrated. A process 1200 is shown wherein English document 1205 and a German document 1210 are placed within the document structure 1215. The process 1200 is not limited to a comparison of the English document 1205 and the German document 1210. Different types of documents (such as a scientific label versus a patient label) can be aligned as well. The document structure 1215 includes Document IQXML structure, full meta-data structure, and images structure. The text 1220 of the first document 1205 is passed to a machine learning (ML) models 1225. The ML models compare the section, format and translated text with the second document 1210. The ML models 1225 compare the section, format, and translated text between the first document 1205 and the second document 1210 at step 1227. The comparison of the section, format, and translated text of the first document 1205 and the second document 1210 enables a multi-language structure or multi-language XLIFF 1230 to be produced. Moreover, a comparison template is also utilized. In particular, the comparison template is configured to identify a type of document for each of the different documents 1205, 1210. Through the use of the comparison template in the case of a scientific label versus a patient label, the comparison template can show where each section of the scientific label matches each section of the patient label. As such, the comparison template for various different document comparisons allows the ability to align sections of documents from one source against another section of a different document. Yet another example can be a protocol. The protocol can have sections for example that include statistical methods required for a clinical trial. As such, that section (through the comparison template) would align to the statistical analysis plan. Accordingly, FIG. 12(A) shows the capability for both a multi-language comparison of the same document but also a comparison of different documents provided that the comparison template is the bridge between the comparison of the same document in different languages and also the comparison of different documents.

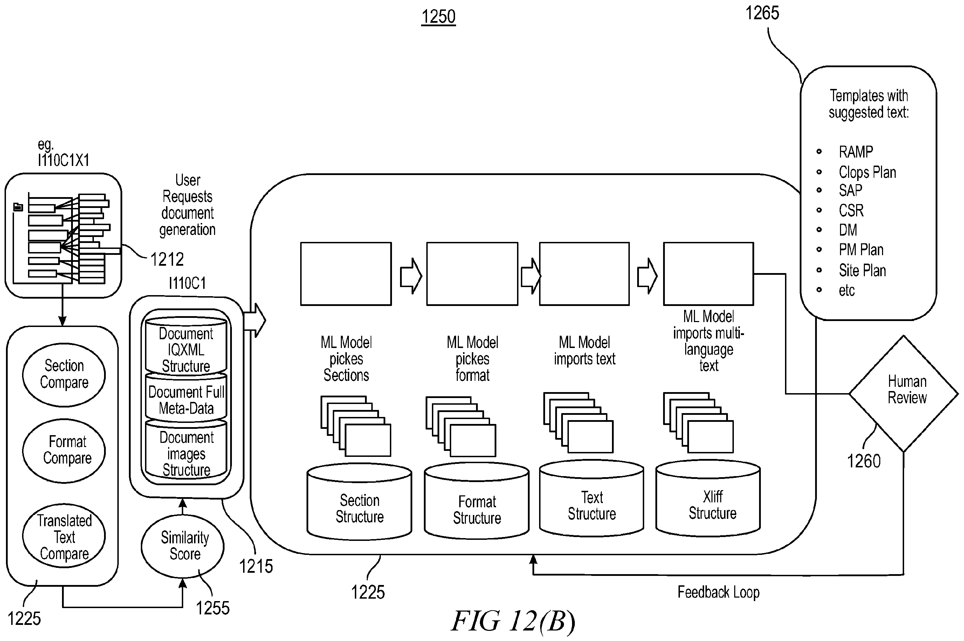

Referring to FIG. 12(B), a process 1250 illustrates how documents from historical data are collected across multiple countries. Documents are built from the historical data collected across multiple countries 1212. The ML models 1225 compare the section, format, and translated text of documents at step 1227 from the document structure 1215 using a comparison template. From the comparison of the section, format, and translated text, a similarity score 1255 is assigned to documents within the document structure 1215. Moreover, the comparison template is configured to identify a type of document for each of the different documents that are compared. The ML models 1225 then pick sections, the format, text, and multi-language text. The selected sections, format, text, and multi-language text are sent for human review 1260. The human review 1260 can review the documents with the sections, format, text and multi-language text imported by the ML models 1225. The human review 1260 may also use the templates with suggested text 1265 when reviewing documents that have been built from historical data collected across multiple countries. In addition, specific labels are created based on the document identification made by the comparison template.

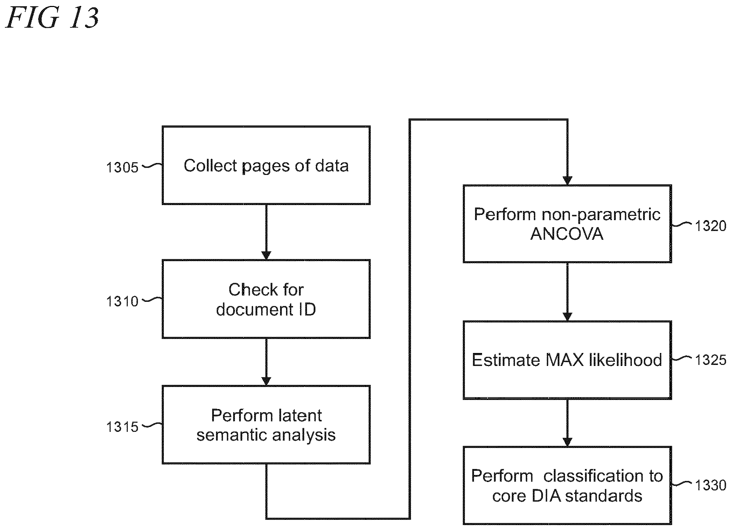

FIG 13 is a flowchart showing an illustrative classification process that may be used as part of the classification and interpretation analyses 325 (FIG 3). In step 1305, relevant pages of the life science document of interest are collected. Document identification (ID) is checked at step 1310. In step 1315, latent semantic analysis (LSA) is performed which may weight document characteristics (e.g., bold text, header location, logo, etc.) for relevance. The LSA results are collated into a non-parametric analysis of covariance (ANCOVA) in step 1320. A maximum likelihood estimate is performed in step 1025, and the document is classified in step 1330, for example to core DIA standards.

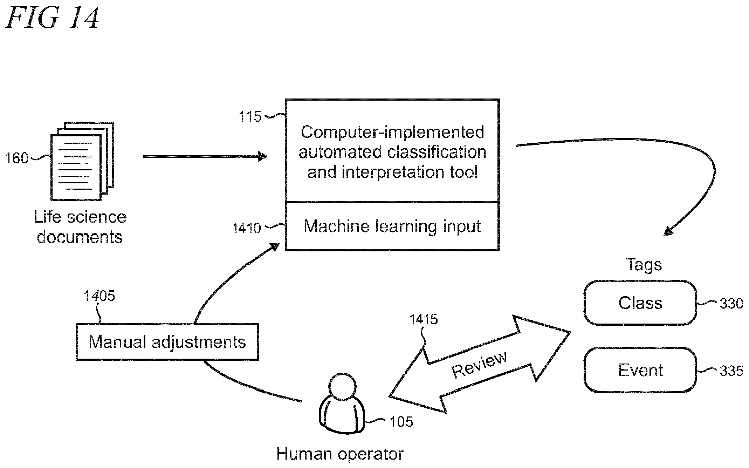

FIG 14 shows illustrative manual adjustments 1405 to the various text, document construct, and image analyses operating on the computer-implemented automated classification and interpretation tool 115 (FIG 1) that may be utilized as machine learning input 1410. In this example, the human operator 105 can perform a review 1415 of the class and event tags 330 and 335 that are output from the tool. The operator may adjust document classification that the automated classification and interpretation tool can analyze to make appropriate changes in the underlying automated analyses. Alternatively, the operator may directly adjust the analyses themselves to achieve a desired outcome. In some cases, the operator may perform multiple adjustment iterations to assist the machine learning process by specifying different classification outcomes, or by varying processing parameters with each iteration.

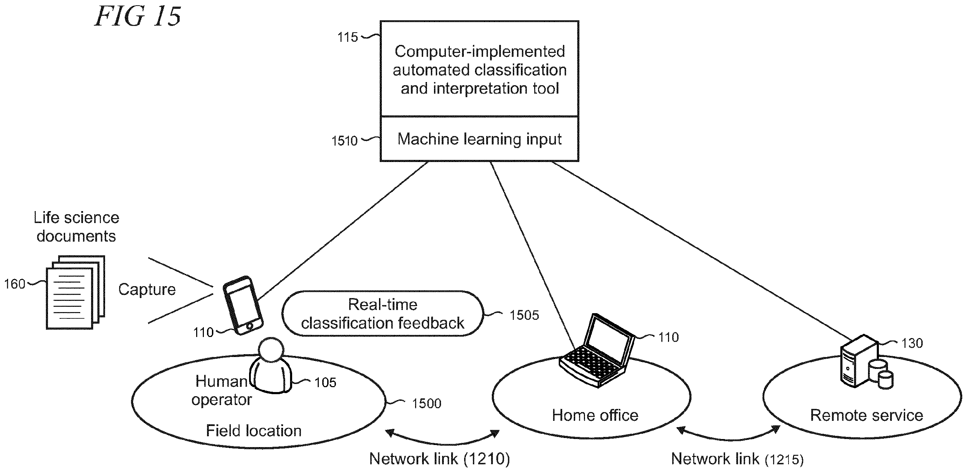

FIG 15 shows illustrative real-time classification feedback 1505 provided by the automated classification and interpretation tool 115 to a human operator 105. In this example, the tool may be separately instantiated on a portable computing device 110 that includes an image capture device such as an integrated camera. The device 110 can thus be operated in a field location 1500 that is co-located, for example, with the life science document 160. Alternatively, the automated classification and interpretation tool may be partially supported by a computing device 110 that is located back at a home office or corporate enterprise and/or using a remote service 130 in a cloud-computing configuration that uses various network links 1510 and 1515 to establish communication and interoperability among the computing elements.

The automated classification and interpretation tool 115 can be operated in the field location 1500 to rapidly apply the text, document construct, and image analyses 310, 315, and 320 to provide real-time classification feedback 1505 for the captured documents to the human operator 105. The real-time classification feedback may include suggested classification for the captured documents as well as associated metadata in some implementations. The operator can review the suggested document classification and metadata and provide approval or corrections through the UI that is exposed on the tool. Corrections can be used as machine learning inputs 1410 to enhance the accuracy of the automated classification and interpretation tool.

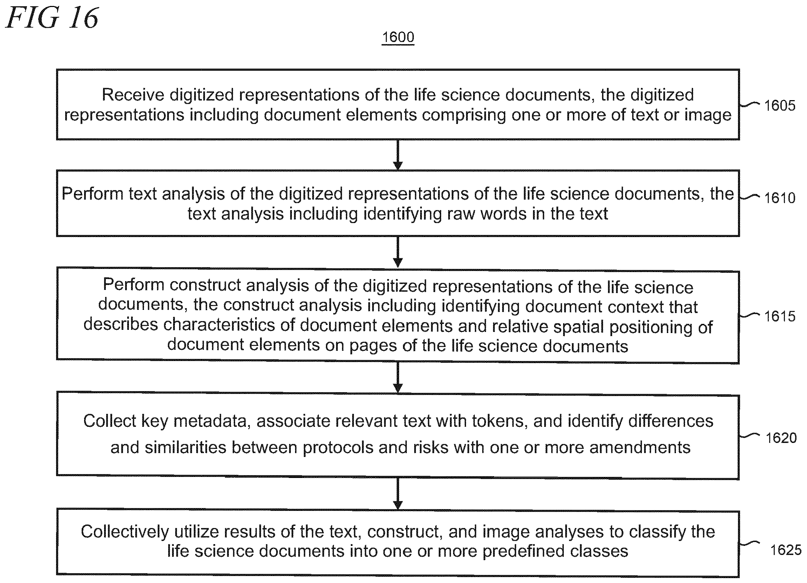

FIGs 16, 17, and 18 show illustrative methods for automated classification of life science documents. Unless specifically stated, methods or steps shown in the flowcharts and described in the accompanying text are not constrained to a particular order or sequence. In addition, some of the methods or steps thereof can occur or be performed concurrently and not all the methods or steps have to be performed in a given implementation depending on the requirements of such implementation and some methods or steps may be optionally utilized.

FIG 16 is a flowchart of an illustrative method 1300 that may be performed by a computing device that supports the automated classification and interpretation tool 115 (FIG 1). In step 1605, the device receives digitized representations of the life science documents, the digitized representations including document elements comprising one or more of text or image. In step 1610, the device performs text analysis of the digitized representations of the life science documents, the text analysis including identifying raw words in the text. In step 1615, the device performs construct analysis of the digitized representations of the life science documents, the construct analysis including identifying document context that describes characteristics of document elements and relative spatial positioning of document elements on pages of the life science documents. In step 1620, the device performs image analysis of the digitized representations of the life science documents, the image analysis including identifying images and processing the identified images to extract additional characteristics for document elements. In step 1625, the device collectively utilizes results of the text, construct, and image analyses to classify the life science documents into one or more predefined classes.

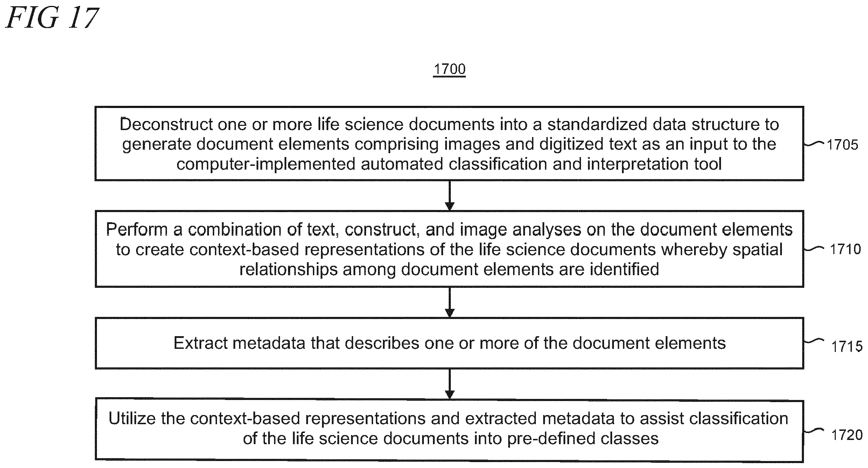

FIG 17 is a flowchart of an illustrative method 1700 that may be performed by a computing device that supports the automated classification and interpretation tool 115 (FIG 1). In step 1705, the device deconstructs one or more life science documents into a standardized data structure to generate document elements comprising images and digitized text as an input to the computer-implemented automated classification and interpretation tool. In step 1710, the device performs a combination of text, construct, and image analyses on the document elements to create context-based representations of the life science documents whereby spatial relationships among document elements are identified. In step 1715, the device extracts metadata that describes one or more of the document elements. In step 1725, the device utilizes the context-based representations and extracted metadata to assist classification of the life science documents into pre-defined classes.

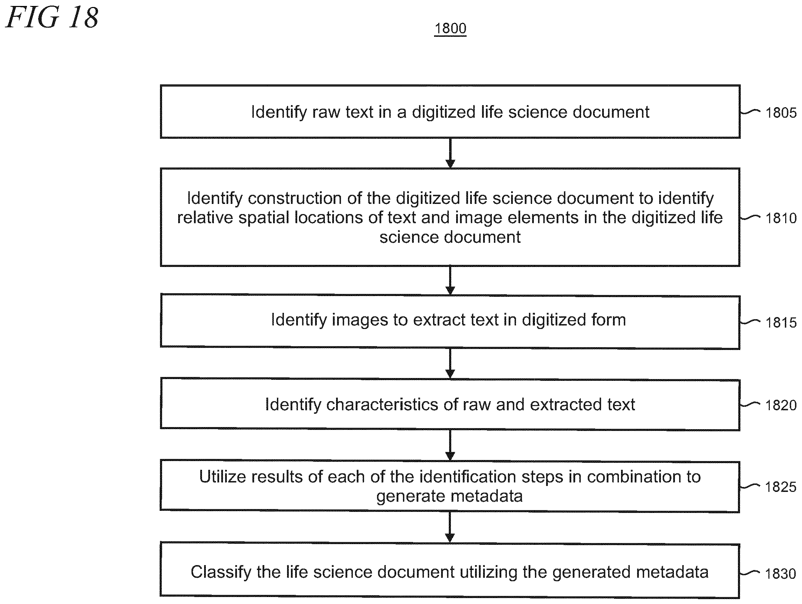

FIG 18 is a flowchart of an illustrative method 1800 that may be performed by a computing device that supports the automated classification and interpretation tool 115 (FIG 1). In step 1805, the device identifies raw text in a digitized life science document. In step 1810, the device identifies construction of the digitized life science document to identify relative spatial locations of text and image elements in the digitized life science document. In step 1815, the device identifies images to extract text in digitized form. In step 1820, the device identifies characteristics of raw and extracted text. In step 1825, the device utilizes results of each of the identification steps in combination to generate metadata. In step 1830 the device classifies the life science document utilizing the generated metadata.

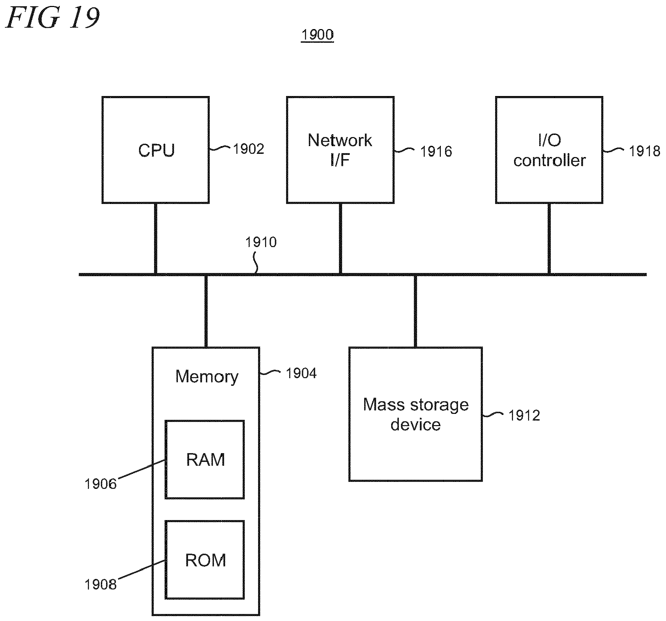

FIG 19 shows an illustrative architecture 1900 for a device, such as a server, capable of executing the various components described herein for the present automated classification and interpretation of life science documents. The architecture 1900 illustrated in FIG. 19 includes one or more processors 1902 (e.g., central processing unit, dedicated artificial intelligence chip, graphic processing unit, etc.), a system memory 1904, including RAM (random access memory) 1906 and ROM (read only memory) 1908, and a system bus 1910 that operatively and functionally couples the components in the architecture 1900. A basic input/output system containing the basic routines that help to transfer information between elements within the architecture 1900, such as during startup, is typically stored in the ROM 1908. The architecture 1900 further includes a mass storage device 1912 for storing software code or other computer-executed code that is utilized to implement applications, the file system, and the operating system. The mass storage device 1912 is connected to the processor 1902 through a mass storage controller (not shown) connected to the bus 1910. The mass storage device 1912 and its associated computer-readable storage media provide non-volatile storage for the architecture 1900. Although the description of computer-readable storage media contained herein refers to a mass storage device, such as a hard disk, solid state drive, or optical drive, it may be appreciated that computer-readable storage media can be any available storage media that can be accessed by the architecture 1900.

By way of example, and not limitation, computer-readable storage media may include volatile and non-volatile, removable and non-removable media implemented in any method or technology for storage of information such as computer-readable instructions, data structures, program modules, or other data. For example, computer-readable media includes, but is not limited to, RAM, ROM, EPROM (erasable programmable read only memory), EEPROM (electrically erasable programmable read only memory), Flash memory or other solid state memory technology, CD-ROM, DVDs, HD-DVD (High Definition DVD), Blu-ray, or other optical storage, magnetic cassettes, magnetic tape, magnetic disk storage or other magnetic storage devices, or any other medium which can be used to store the desired information and which can be accessed by the architecture 1600.

According to various embodiments, the architecture 1600 may operate in a networked environment using logical connections to remote computers through a network. The architecture 1600 may connect to the network through a network interface unit 1616 connected to the bus 1610. It may be appreciated that the network interface unit 1616 also may be utilized to connect to other types of networks and remote computer systems. The architecture 1600 also may include an input/output controller 1618 for receiving and processing input from several other devices, including a keyboard, mouse, touchpad, touchscreen, control devices such as buttons and switches or electronic stylus (not shown in FIG 16). Similarly, the input/output controller 1618 may provide output to a display screen, user interface, a printer, or other type of output device (also not shown in FIG 16).

It may be appreciated that the software components described herein may, when loaded into the processor 1602 and executed, transform the processor 1602 and the overall architecture 1600 from a general-purpose computing system into a special-purpose computing system customized to facilitate the functionality presented herein. The processor 1602 may be constructed from any number of transistors or other discrete circuit elements, which may individually or collectively assume any number of states. More specifically, the processor 1602 may operate as a finite-state machine, in response to executable instructions contained within the software modules disclosed herein. These computer-executable instructions may transform the processor 1602 by specifying how the processor 1602 transitions between states, thereby transforming the transistors or other discrete hardware elements constituting the processor 1602.

Encoding the software modules presented herein also may transform the physical structure of the computer-readable storage media presented herein. The specific transformation of physical structure may depend on various factors, in different implementations of this description. Examples of such factors may include, but are not limited to, the technology used to implement the computer-readable storage media, whether the computer-readable storage media is characterized as primary or secondary storage, and the like. For example, if the computer-readable storage media is implemented as semiconductor-based memory, the software disclosed herein may be encoded on the computer-readable storage media by transforming the physical state of the semiconductor memory. For example, the software may transform the state of transistors, capacitors, or other discrete circuit elements constituting the semiconductor memory. The software also may transform the physical state of such components in order to store data thereupon.

As another example, the computer-readable storage media disclosed herein may be implemented using magnetic or optical technology. In such implementations, the software presented herein may transform the physical state of magnetic or optical media, when the software is encoded therein. These transformations may include altering the magnetic characteristics of particular locations within given magnetic media. These transformations also may include altering the physical features or characteristics of particular locations within given optical media to change the optical characteristics of those locations. Other transformations of physical media are possible without departing from the scope and spirit of the present description, with the foregoing examples provided only to facilitate this discussion.

In light of the above, it may be appreciated that many types of physical transformations take place in the architecture 1600 in order to store and execute the software components presented herein. It also may be appreciated that the architecture 1600 may include other types of computing devices, including wearable devices, handheld computers, embedded computer systems, smartphones, PDAs, and other types of computing devices known to those skilled in the art. It is also contemplated that the architecture 1600 may not include all of the components shown in FIG 16, may include other components that are not explicitly shown in FIG 16, or may utilize an architecture completely different from that shown in FIG 16.

The subject matter described above is provided by way of illustration only and is not to be construed as limiting. Various modifications and changes may be made to the subject matter described herein without following the example embodiments and applications illustrated and described, and without departing from the true spirit and scope of the present invention, which is set forth in the following claims.

## Claims

1. A computer-implemented method for performing quality review of life science documents (160), the method comprising:
scanning one or more of the life science documents by a mobile device (1010), wherein the one or more life science documents are sent to a database (1020);
checking content of the one or more life-science documents, wherein, language, image, rotation, and noise are among the content that is checked among the life science documents, and wherein similarities, suspicious changes, document layouts, and missing sections are checked among the one or more life science documents;
sending feedback by a system (1045) to an originator (1055) of the life-science documents based on the content regarding imaging, rotation, and noise and the similarities, suspicious changes, document layouts and missing sections, wherein the feedback includes whether the life-science documents are free of any issues or whether the life science documents include one or more issues, and wherein the system provides an ID for the content-checked life science documents; and
sharing redacted content of the life science documents, wherein content that will require potential redaction is identified.

2. The computer-implemented method of claim 1, wherein the checking of the content includes checking for privacy data.

3. The computer-implemented method of claim 1, wherein the checking of the content includes checking for at least one valid signature.

4. The computer-implemented method of claim 1, wherein the redacted content of the one or more life science documents are de-identified upon request.

5. The computer-implemented method of claim 1, wherein a check of the readability of the one or more life science documents is performed.

6. A computer-implemented method for performing an automated feedback loop, the method comprising:
downloading and updating a master data set of clinical documents (1110) that are used in supervised learning of multiple classifiers;
updating ground truth labels for each of the clinical documents, wherein the ground truth labels are updated as the master data set of clinical documents is updated;
generating an AI analysis data frame based on the generated ground truth labels for the master data set of the clinical documents, wherein an automated defect detection and confidence recalibration is performed to enable the AI analysis data frame to be produced; and
providing a training dataset, wherein the generated AI analysis data frame provides the new training dataset.

7. The computer-implemented method of claim 6, wherein the confidence recalibration includes checking for confusion metrics of a final output.

8. The computer-implemented method of claim 6, wherein the automated defect detection includes checking for variance between intermediate and final outputs.

9. The computer-implemented method of claim 6, wherein the updating of the ground truth labels involves capitalizing on a IQV.XML data structure.

10. The computer-implemented method of claim 6, wherein confidence of future AI outputs is updated in an automated fashion.

11. The computer-implemented method of claim 6, wherein new document types are detected, gathered, and trained.

12. A computer-implemented method for a multi-language document creator, the method comprising:
uploading a set of documents into a device, wherein the set of documents are documents of different language types;
comparing the different language documents based on a comparison template, wherein document structure, metadata, and images can be used so that sections of each of the different language documents, a format for each of the different language documents, and translated text for each of the different language documents can be compared, wherein the comparison template is configured to identify a type of document for each of the different documents compared; and
building the set of documents from historical data using the comparison of the different documents, wherein specific labels are created based on the document identification made by the comparison template.

13. The computer-implemented method of claim 12, wherein a machine-learning (ML) model identifies best/optimal text to auto-populate the different language documents.

14. The computer-implemented method of claim 12, wherein a machine-learning (ML) model identifies best/optimal documents among the different language documents.

15. The computer-implemented method of claim 12, wherein a machine-learning (ML) model compares the sections, formats and translated text of the different language documents.
